# FASCICULE DE BREVET EUROPEEN

(11) **EP 0 831 360 B1**
(45) Date de publication et mention de la délivrance du brevet: **05.09.2007**
(21) Numéro de dépôt: 97402158.6
(22) Date de dépôt: 18.09.1997
(51) Int. Cl.: G02F 1/15, H01M 6/18, G01N 27/416, H01M 10/36, H01M 10/34

(54) **Dispositif électrochimique**
Elektrochemische Vorrichtung
Electrochemical device

(30) Priorité: 18.09.1996 FR 9611392
(43) Date de publication de la demande: 25.03.1998
(73) Titulaire: SAINT-GOBAIN GLASS FRANCE, 92400 Courbevoie (FR)
(72) Inventeur: Giron, Jean-Christophe, 75012 Paris (FR)
(74) Mandataire: Renous Chan, Véronique

(56) Documents cités:
- EP-A- 0 483 893
- EP-A- 0 499 115
- EP-A- 0 628 849
- EP-A- 0 867 752
- US-A- 4 179 491
- US-A- 4 832 463
- US-A- 5 276 547
- PATENT ABSTRACTS OF JAPAN vol. 097, no. 001, 31 janvier 1997 & JP 08 239218 A (MITSUI PETROCHEM IND LTD)
- PATENT ABSTRACTS OF JAPAN vol. 095, no. 005, 30 juin 1995 & JP 07 043753 A (ASAHI GLASS CO LTD), 14 février 1995,

## Description

La présente invention concerne le domaine des dispositifs électrochimiques comportant au moins une couche électrochimiquement active susceptible d'insérer réversiblement et simultanément des ions et des électrons, en particulier des dispositifs électrochromes. Ces dispositifs électrochimiques sont notamment utilisés pour fabriquer des vitrages dont la transmission lumineuse et/ou énergétique ou la réflexion lumineuse peuvent être modulées au moyen d'un courant électrique. Ceux-ci peuvent aussi être utilisés pour fabriquer des éléments de stockage d'énergie tels que des batteries ou encore des capteurs de gaz.

Si l'on prend l'exemple particulier des systèmes électrochromes, on rappelle que ces derniers, de manière connue, comportent une couche d'un matériau capable d'insérer de façon réversible et simultanée des cations et des électrons et dont les états d'oxydation correspondant aux états inséré et désinséré sont de coloration distincte, un des états étant généralement transparent. La réaction d'insertion ou de désinsertion est commandée par une alimentation électrique adéquate, notamment par application d'une différence de potentiel adaptée. Le matériau électrochrome, en général à base d'oxyde de tungstène, doit ainsi être mis en contact avec une source d'électrons telle qu'une couche électroconductrice transparente et une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome de sorte que, macroscopiquement, l'électrolyte apparaît comme un simple médium des cations.

La contre-électrode doit être constituée ou d'une couche neutre en coloration ou du moins transparente quand la couche électrochrome est à l'état décoloré. L'oxyde de tungstène étant un matériau électrochrome cathodique, c'est-à-dire que son état coloré correspond à l'état le plus réduit, un matériau électrochrome anodique tel que l'oxyde de nickel ou l'oxyde d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline...) ou le bleu de Prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :
- soit l'électrolyte se présente sous la forme d'un polymère ou d'un gel, par exemple un polymère à conduction protonique tel que ceux décrits dans le brevets européens EP-0 253 713 et EP-0 670 346, ou un polymère à conduction d'ions lithium tels que ceux décrits dans les brevets EP-0 382 623, EP-0 518 754 ou EP-0 532 408 ;
- soit l'électrolyte est une couche minérale, conducteur ionique mais isolant électroniquement, on parle alors de systèmes électrochromes « tout solide ».

Il a été également proposé dans le brevet FR96/03799 déposé le 27 mars 1996 (correspondant au brevet européen EP-97.400702.3 du 27 mars 1997) d'utiliser un électrolyte à une ou plusieurs couches, dont au moins une couche électrochimiquement active susceptible d'insérer réversiblement les ions, notamment des cations du type H⁺, Li⁺, Na⁺, Ag⁺, mais dont le degré d'oxydation global est maintenu essentiellement constant, soit en l'isolant électriquement d'au moins une des sources d'électrons du dispositif, notamment par association avec une couche isolante électroniquement mais néanmoins perméable aux ions, soit en ajustant l'alimentation électrique du dispositif , de sorte que l'on maintienne le potentiel de la couche à des valeurs hors de la plage de potentiels qui provoquerait une variation du taux d'insertion ionique de son matériau constitutif.

Tous ces dispositifs électrochimiques autorisent une réversibilité satisfaisante des phénomènes d'insertion/désinsertion d'ions, donc des phénomènes de coloration/décoloration dans le cas spécifique des systèmes électrochromes. Toutefois, il est apparu que ce caractère de réversibilité pouvait avoir tendance à se dégrader au cours du temps, notamment du fait d'une exposition prolongée à des rayons ultraviolets ou à la chaleur (par exemple quand la température atteint 80°C), ou du fait d'un nombre élevé de commutations d'un état de coloration à un autre, (notamment supérieur à 100.000).

Cette question a été étudiée dans le brevet EP-0 628 849 précité, où, plus particulièrement dans le cas où l'électrolyte est choisi sous forme d'un polymère, il a été prévu d'intercaler une « couche-barrière » entre l'électrolyte polymère et la contre-électrode. Cette couche-barrière, notamment minérale du type oxyde de tantale, est en un matériau suffisamment conducteur ionique/perméable aux ions pour ne pas entraver le transfert de cations d'une couche électrochimiquement active à l'autre, mais elle permet de limiter la dégradation du système en retardant la réduction irréversible de la contre-électrode, voire même sa dissolution dans certains cas, au contact de l'électrolyte polymère.

On a donc, en quelque sorte, tout comme dans le brevet FR96/03799, des électrolytes qui sont en fait constitués non pas d'une unique couche, mais éventuellement d'un empilement multicouches, si l'on comprend par « électrolyte » l'ensemble des couches conductrices ioniques disposées entre électrode et contre-électrode, ou, exprimé différemment, entre les deux couches électrochimiquement actives du système. Et dans cet empilement intervient au moins une couche de type minéral, le mode de réalisation le plus fréquent étant une couche sous forme d'oxyde. Dans ce cas de figure, notamment, cette couche de l'électrolyte a un degré d'oxydation qui reste essentiellement constant lors du fonctionnement du système.

On constate donc que beaucoup de systèmes électrochimiques, notamment du type systèmes électrochromes, ont désormais recours, pour constituer leur électrolyte, à des matériaux à fonction de conduction ionique qui sont de type minéral, qui viennent compléter ou se substituer à des matériaux conducteurs organiques du type polymère.

Le but de l'invention est alors de parvenir à améliorer la conductivité ionique de ce type de matériau afin d'améliorer les performances de l'électrolyte des dispositifs électrochimiques précédemment décrits.

Le document EP0 867752 A1, faisant partie de l'état de la technique au sens de l'article 54(3) CBE, décrit un électrolyte comportant un oxyde métallique hydraté.

L'objet de l'invention concerne un dispositif électrochimique comme décrit dans la revendication 1.

Le terme « électrolyte » a été défini plus haut, c'est le matériau ou l'ensemble de matériaux qui va transférer les ions insérés réversiblement par la ou les couches électrochimiquement actives du système.

Le terme « composé » désigne tout élément, groupement fonctionnel, molécule, d'origine minérale, organique ou « hybride » minéral/organique et qui est susceptible d'introduire des atomes d'hydrogène et/ou d'azote dans la couche, soit par incorporation des composés « tels quels » dans la couche, soit par « libération » de fonctions porteuses d'atomes d'azote et/ou d'hydrogène provenant desdits composés dans la couche.

Il s'est en effet avéré que l'on pouvait contrôler et tout particulièrement augmenter significativement, la conduction ionique de ce type de matériau en le « dopant » en quelque sorte par des composés à atomes H et/ou N, même si le mécanisme exact qui provoque une telle amélioration est complexe et n'a pas encore été totalement élucidé.

Un composé préféré selon l'invention est l'ammoniac NH₃.

Comme cela sera détaillé ultérieurement, l'eau est un composé hydrogéné particulièrement utile et efficace pour améliorer la conduction ionique de nombre d'oxydes métalliques, et plusieurs techniques de dépôt de couches peuvent permettre de contrôler et de sélectionner précisément la teneur en eau de la couche selon différents critères.

Il peut s'agir aussi bien d'eau d'adsorption que d'eau de constitution, et l'oxyde métallique peut, une fois hydraté, présenter en fait des fonctions hydroxyle. Dans ce cas plus particulier, la présence d'eau dans la couche est particulièrement recommandée si le dispositif électrochimique fonctionne par insertion réversible de protons.

De préférence, il s'agit de couches à base d'au moins un oxyde d'un métal appartenant à la famille des métaux de transition, notamment ceux de la colonne lvb et Vb du tableau périodique, et/ou à base d'au moins un oxyde appartenant aux groupes IVa et Va du tableau périodique. Sont particulièrement visés, notamment, l'oxyde de chrome, d'indium, de thorium, de zirconium, d'hafnium, d'antimoine, de tantale, de titane, de germanium, de silicium et les oxydes mixtes de ces métaux, notamment oxyde mixte tantale/titane, ainsi que les oxydes mixtes de ces métaux, associant à au moins un oxyde de l'un de ces métaux un oxyde métallique à propriété d'insertion réversible de cations du type électrochrome tels que les oxydes d'indium, de niobium, de bismuth, de tungstène, de nickel, de cobalt...

On peut également appliquer l'invention à des matériaux faisant fonction d'électrolyte tels que ceux décrits dans le brevet FR96/03799, ou EP-97.400702.3 précité, c'est-à-dire des matériaux conducteurs ioniques susceptibles d'insérer de manière réversible les ions mais dont le degré d'oxydation global est maintenu essentiellement constant. On se rapportera au texte de brevet pour plus de détails.

Ces matériaux peuvent être rangés en deux catégories non limitatives, selon le type de cations qu'ils sont aptes à insérer, sans distinguer s'ils sont à coloration anodique, cathodique ou s'ils ne changent pas de coloration en fonction de leur taux d'insertion :
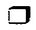 ces matériaux peuvent être aptes à insérer des protons, et ils peuvent notamment comporter au moins un des composés suivants : oxyde de tungstène W, de niobium Nb, d'étain Sn, de bismuth Bi, de vanadium Va. Il peut s'agir aussi d'oxyde de nickel ou d'iridium. Ces oxydes peuvent en outre comporter un métal additionnel du type titane, tantale ou rhénium, dont le rôle est variable. Le métal additionnel peut, par exemple, augmenter le caractère hydrophile de l'oxyde.
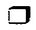 ces matériaux peuvent être aptes à insérer des ions lithium Li⁺, et peuvent notamment comporter au moins un oxyde métallique lithié ou non, tel que l'oxyde de nickel NiOₓ, l'oxyde de nickel lithié LiNiOₓ, un mélange d'oxydes de titane et de cérium Ce/TiOₓ, l'oxyde de tungstène, de niobium,de vanadium, ou d'iridium.

On peut choisir la couche selon l'invention de façon à ce qu'elle soit isolante électroniquement. C'est une propriété importante, notamment dans le cas où elle peut permettre d'isoler électroniquement la ou les autres couches constituant l'électrolyte des sources d'électrons du dispositif, par exemple dans la configuration décrite dans le brevet FR96/03799.

Le dispositif électrochimique incorporant dans son électrolyte la couche selon l'invention peut être conçu de manière à ce que l'électrolyte soit en fait un empilement multicouches. L'empilement peut alors comporter, outre la couche, au moins une autre couche en matériau essentiellement minéral. Il peut d'ailleurs comporter non pas une, mais au moins deux couches selon l'invention

L'électrolyte peut ainsi être multicouches, et ne contenir que des couches de matériau solide. L'électrolyte « tout solide » peut aussi comprendre au moins deux couches de matériau solide, notamment des séquences de deux couches de type WO₃/Ta₂O₅ ou Sb₂O₅, NiOₓ/WO₃, SnO₂/Ta₂O₅, SnO₂/Sb₂O₅, NiOₓ/Ta₂O₅, NiOₓ/Sb₂O₅, au moins un de ces oxydes étant hydrogéné et/ou azoté conformément à l'invention. De préférence, l'électrolyte mono ou multicouches de l'invention a une épaisseur au maximum de 5 µm, et notamment de l'ordre de 10 nm à 1 µm, notamment pour des applications dans les vitrages électrochromes.

Dans le contexte de l'invention, on entend par « matériau solide » tout matériau ayant la tenue mécanique d'un solide, en particulier tout matériau essentiellement minéral ou organique ou tout matériau hybride, c'est-à-dire partiellement minéral et partiellement organique, comme les matériaux que l'on peut obtenir par dépôt sol-gel à partir de précurseurs organo-minéraux.

On a alors une configuration de système dit « tout solide » qui présente un avantage clair en termes de facilité de fabrication. En effet, quand le système contient un électrolyte sous forme de polymère qui n'a pas la tenue mécanique d'un solide, par exemple, cela contraint à fabriquer en fait, en parallèle, deux « demi-cellules » constituées chacune d'un substrat porteur revêtu d'une première couche électroconductrice puis d'une seconde couche électrochimiquement active, ces deux demi-cellules étant ensuite assemblées en insérant entre elles l'électrolyte. Avec une configuration « tout solide », la fabrication est simplifiée, puisque l'on peut déposer l'ensemble des couches du système, l'une après l'autre, sur un unique substrat porteur. On allège en outre le dispositif, puisqu'il n'est plus indispensable d'avoir deux substrats porteurs.

Mais on peut préférer un électrolyte sous forme d'un empilement multicouches comportant un conducteur ionique différent. Il peut s'agit d'une couche de liquide aqueux, tel que de l'eau additionnée d'acide sulfurique ou phosphorique dans le cas d'une insertion réversible de protons, d'une couche de liquide anhydre tel que du carbonate de propylène contenant un sel de lithium dans le cas d'une insertion réversible d'ions lithium.

Il peut aussi s'agir d'une couche de gel ou de polymère, notamment des polymères conducteurs protoniques du type solution solide de polyoxyéthylène et d'acide phosphorique POE-H₃PO₄ (dans ce cas, le polymère constitue également un isolant électronique) ou encore à base d'un polymère obtenu par copolymérisation de trois précurseurs comprenant deux types de trialkoxysilanes greffés et un plastifiant présentant au moins un groupement urée. En tant que polymère conducteur d'ions lithium, on peut choisir un ionomère obtenu par neutralisation partielle d'acide polyacrylique, ou un polymère à base de polyéthylène imine branchée et d'un sel de lithium. Pour plus de détails sur la nature et la synthèse de tels produits polymères, on se reportera avantageusement aux brevets cités en préambule de la présente demande.

On peut ainsi prévoir un électrolyte multicouches de type (couche selon l'invention/ POE-H₃PO₄) ou (couche selon l'invention/ POE-H₃PO₄/couche selon l'invention). On rejoint l'enseignement du brevet EP-0 628 849 précité, les couches selon l'invention évitant le contact acide du polymère avec la contre-électrode et empêchant ainsi la dégradation de celle-ci. Hydrater ces couches permet de leur faire jouer efficacement leur rôle de barrière, sans pénaliser les performances de l'électrolyte, puisque cela permet d'ajuster leur niveau de conduction ionique en rapport avec celle des autres matériaux de l'électrolyte, notamment ici avec celle du polymère.

L'invention concerne non seulement des dispositifs électrochimiques ayant recours aux électrolytes à conductivité ionique améliorée décrits précédemment, mais aussi, indépendamment de ces derniers, à ces mêmes dispositifs ayant recours à des couches électrochimiquement actives améliorées : pour que ces dispositifs fonctionnent, il est nécessaire « d'injecter » dans le système les cations susceptibles de s'insérer réversiblement. Cela peut se faire par immersion de l'une des couches électrochimiquement active, une fois fabriquée, dans un bain contenant en solution les sels appropriés. Cette opération dite de pré-insertion allonge le temps de fabrication du dispositif, et on craint toujours de ne pouvoir « sécher » suffisamment la couche une fois sortie du bain. L'invention propose une pré-insertion « in-situ » de ladite couche, c'est-à-dire pendant sa fabrication même, les résultats les meilleurs ayant été obtenus par les couches de type WO3, c'est-à-dire à propriétés électrochromes de préférence de coloration cathodique par insertion réversible de protons.

Son procédé de dépôt peut se faire par le même type de technique que pour l'électrolyte précédent, notamment sous vide du type pulvérisation cathodique, la pré-insertion s'effectuant en utilisant une cible de métal et une atmosphère réactive utilisant un composé oxydant du type O2 et un composé susceptible d'apporter les protons insérables réversiblement du type H2, ... On introduit de préférence de l'hydrogène dans une atmosphère O2/Ar, en contrôlant finement les conditions, notamment les quantités relatives introduites en H2 ou O2 pour finalement obtenir la pré-insertion recherchée, différente de la modification du type hydratation (non réversible) de l'électrolyte exposée précédemment. On parvient ainsi à fabriquer un oxyde réduit, pré-inséré de manière suffisante : pour une couche à base d'oxyde de tungstène, on mesure des densités de courant de l'ordre de plus de 0 à 0 à 20 mC/cm² par 100 nm d'épaisseur.

L'invention concerne également toutes les applications du dispositif électrochimique qui a été décrit et qui sont notamment au nombre de trois :
- la première application concerne les vitrages électrochromes. Dans ce cas, avantageusement, on prévoit que le ou les substrat(s) du dispositif est (sont) transparent(s), en verre ou en plastique, quand les vitrages sont destinés à fonctionner en transmission lumineuse variable. Si on souhaite conférer au vitrage une fonction miroir, et le faire fonctionner en réflexion lumineuse variable, plusieurs solutions sont possibles : soit on choisit un des substrats opaque et réfléchissant (par exemple une plaque métallique), soit on associe le dispositif à un élément opaque et réfléchissant, soit on choisit une des couches électroconductrices du dispositif de nature métallique et suffisamment épaisse pour être réfléchissante.
   Notamment quand le vitrage est destiné à fonctionner en transmission lumineuse variable, avec un dispositif muni d'un ou deux substrats transparents, on peut le monter en vitrage multiple, notamment en double-vitrage avec un autre substrat transparent, et/ou en vitrage feuilleté ;
- la seconde application concerne les éléments de stockage d'énergie, tout particulièrement les batteries, que l'on peut utiliser par exemple dans tous les appareils faisant intervenir des moyens électroniques et/ou informatiques, et tous les appareils nécessitant un dispositif de stockage d'énergie qui leur soit propre, autonome ou non ;
- la troisième application concerne les capteurs de gaz.

Des joints du type époxy sont avantageusement prévus pour étanchéifier les couches fonctionnelles.

Si l'on revient à la première application, celle des vitrages électrochromes, ces derniers peuvent avantageusement être employés en tant que vitrages pour le bâtiment, pour l'automobile, vitrages de véhicule industriel/de transport collectif, vitrages d'avion, vitrages ferroviaires, rétroviseurs, miroirs ou en tant qu'éléments d'optique tels que les objectifs d'appareil photographique, ou encore en tant que face avant ou élément à disposer sur ou à proximité de la face avant d'écrans de visualisation d'appareils tels que les ordinateurs ou les télévisions.

Il s'est avéré avantageux de privilégier, notamment dans l'application aux vitrages électrochromes, une structure feuilletée du type substrat rigide (verre)/empilement fonctionnel/intercalaire polymère/substrat rigide (verre en polycarbonate) ou couches type polyéthylènetéréphtalate PET.

L'intercalaire est choisi de préférence à base d'éthylène vinylacétate (EVA) ou de ses copolymères, il peut aussi être en polyuréthane (PU), en polyvinylbutyral (PBV) en résine pluri ou mono-composants réticulable thermiquement (époxy, PU) ou aux ultraviolets (époxy, résine acrylique). L'intercalaire est important en ce sens qu'il peut permettre à l'empilement fonctionnel de garder son degré d'hydratation constant ou tout au moins suffisamment élevé pour conserver sa fonctionnalité, quand il est exposé à des températures élevées, ce qui peut être le cas des vitrages électrochromes utilisés en vitrages extérieurs exposés au rayonnement solaire. L'EVA présente en plus l'avantage de pouvoir être feuilleté à plus basse température que, par exemple, le PVB : d'une part, on ne risque pas de fragiliser le système lors du feuilletage, d'autre part on le protège de la déshydratation lorsqu'il est exposé au soleil.

Les dispositifs de l'invention utilisés en tant que batterie peuvent aussi être employés dans le domaine du bâtiment ou des véhicules, ou faire partie d'appareils du type ordinateurs, télévisions, ou téléphones.

L'invention concerne également le procédé de fabrication du dispositif selon l'invention : on peut déposer la couche électrolyte de l'invention faisant partie de l'électrolyte par une technique utilisant le vide, du type pulvérisation cathodique, éventuellement assistée par champ magnétique, par évaporation thermique, par CVD (Chemical Vapor Deposition) plasma ou par des techniques à pression atmosphérique, notamment par dépôt de couches par synthèse sol-gel, notamment de type trempé, spray-coating ou enduction laminaire. Il peut aussi s'agir d'une technique de pyrolyse en phase liquide ou pulvérulente, ou de pyrolyse en phase gazeuse type CVD mais à pression atmosphérique.

En fait, il est ici particulièrement avantageux de recourir à une technique de dépôt sous vide, notamment du type pulvérisation, car elle permet une maîtrise très fine du taux de composé(s) hydrogéné(s) et/ou azoté(s) que l'on souhaite obtenir dans la couche une fois déposée.

Elle permet aussi d'ajuster au mieux ce taux en fonction du type de matériau constitutif de la couche pour atteindre la conductivité ionique maximale.

Ainsi, on peut déposer la couche électrolyte par pulvérisation cathodique réactive, dans une atmosphère contenant les composés azotés et/ou hydrogénés ou leurs « précurseurs ». On comprend par « précurseurs » les molécules, composés qui sont aptes à interagir et/ou se décomposer sous certaines conditions pour former dans la couche le composé hydrogéné et/ou azoté souhaité. Ainsi, dans un exemple non couvert par l'invention, si le composé hydrogéné est de l'eau, et si l'on souhaite fabriquer une couche d'oxyde hydraté, on peut choisir un dépôt par pulvérisation avec une atmosphère réactive contenant soit directement de la vapeur d'eau avec ou sans gaz porteur, soit des « précurseurs » d'eau tel qu'un mélange en proportions judicieuses de H₂ et O₂. L'atmosphère peut en outre comporter tout autre gaz, notamment susceptible d'augmenter le taux de pulvérisation de la cible, il peut s'agir d'argon Ar, de Xénon Xe, de Néon Ne, outre des gaz inertes type azote N₂. Quand on choisit une atmosphère de pulvérisation à mélange H₂/O₂, on a en fait une partie des ions accélérés qui a une énergie suffisante pour rompre les liaisons H-H de l'hydrogène et O-O de l'oxygène, et ainsi permettre la formation in situ de vapeur d'eau apte à s'incorporer dans la couche en formation. L'énergie nécessaire à rompre ces liaisons H-H et O-O peut être fournie par les espèces excitées par le plasma ou générées par la cible du métal dont on veut former l'oxyde, ou par toute autre source, par exemple par un plasma annexe.

Industriellement, on privilégie l'utilisation d'un plasma en présence d'un mélange H₂/O₂ plutôt que d'introduire directement de la vapeur d'eau. En effet, la mise en oeuvre en est plus facile, il s'est avéré que l'on contrôlait mieux l'homogénéité du taux d'hydratation de la couche dans son épaisseur sur la totalité de la surface du substrat à revêtir. Et le risque est moindre de « polluer » la chambre de pulvérisation par de l'eau résiduelle. Cela autorise également un meilleur contrôle de la conductivité de la couche, car on peut ajuster non seulement la teneur en mélange H₂/O₂ de l'atmosphère de pulvérisation, mais en outre les proportions relatives de H₂ et O₂ dans le mélange. Pour ce faire, on peut également utiliser un mélange N₂O/H₂.

Pour déposer une couche électrolyte selon l'invention qui soit nitrurée, on peut introduire dans la chambre de pulvérisation un gaz de type NH₃.

On peut également déposer la couche électrolyte selon l'invention par évaporation thermique, comme évoqué précédemment. Elle peut être assistée par un faisceau d'électrons, les composés hydrogénés et/ou azotés ou leurs « précurseurs » étant introduits dans la couche sous forme gazeuse et/ou étant contenus dans le matériau destiné à être évaporé.

La couche électrolyte selon l'invention peut aussi être déposée par une technique de type sol-gel. La maîtrise de la teneur en composés hydrogénés et/ou azotés est obtenue par différents moyens : on peut adapter la composition de la solution pour qu'elle contienne ces composés ou leurs « précurseurs », de celle de l'atmosphère où s'effectue le dépôt. On peut affiner ce contrôle également en ajustant la température de dépôt/durcissement de la couche.

D'autres détails et caractéristiques avantageux de l'invention ressortent de la description faite ci-après en référence aux dessins annexés qui représentent :
- figure 1 : une représentation d'un premier mode de réalisation d'un vitrage électrochrome non couvert par l'invention,
- figure 2 : une représentation d'un second mode de réalisation d'un vitrage électrochrome non couvert par l'invention,
- figure 3 : un voltamogramme d'un vitrage selon la figure 1,
- figure 4 : une courbe d'analyse « FTIR » (analyse infrarouge par transformée de Fourier) de couches non couvert par l'invention.
- figure 5 : un graphe de fonctionnement d'un vitrage électrochrome non couvert par l'invention.

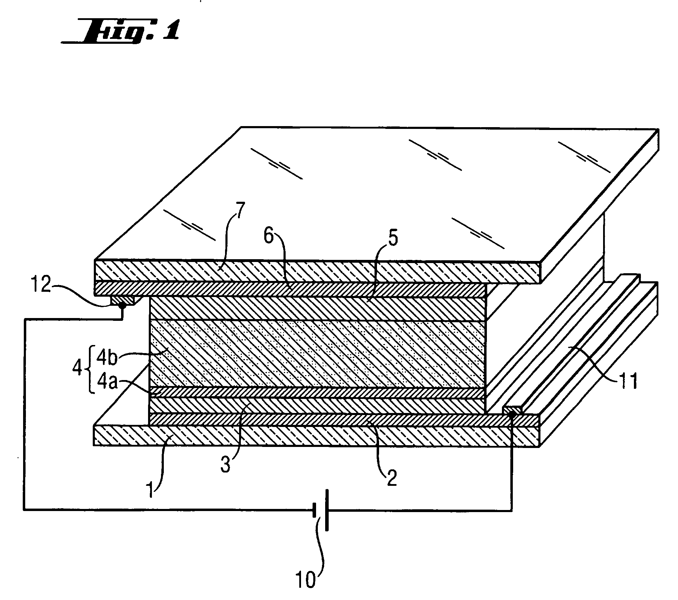

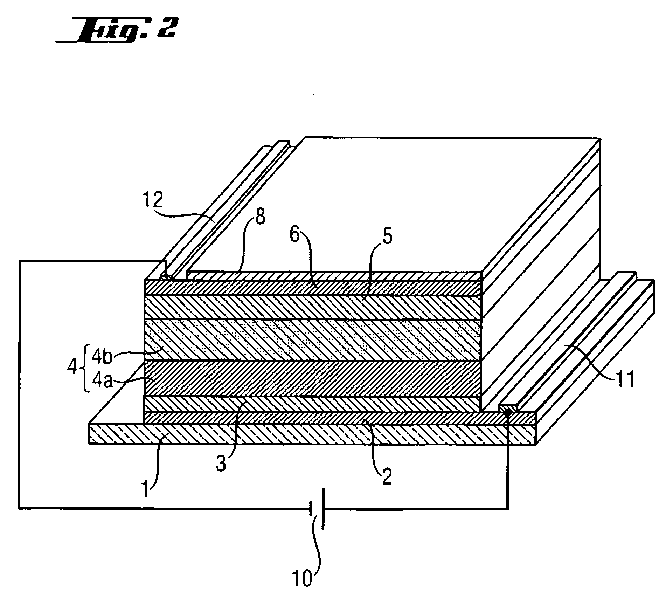

Les figures 1 et 2 sont extrêmement schématiques et ne respectent pas les proportions entre les différents éléments représentés, ceci afin d'en faciliter la lecture.

Avant d'en commencer la description détaillée, on décrit trois types de couches non couverts par l'invention aptes à servir d'électrolyte dans un vitrage électrochrome. Ces trois types de couches ont été déposées identiquement sur différents substrats, afin de pouvoir effectuer certaines analyses : on les a déposées sur un substrat de silicium poli sur ses deux faces pour effectuer leur analyse FTIR, sur un substrat en verre silico-sodo-calcique recouvert d'une fine couche de nickel-chrome pour mesurer leur conductivité ionique par impédancemétrie. Enfin, en vue de les intégrer dans un vitrage électrochrome en tant qu'électrolyte, on les a déposées sur un substrat en verre clair silico-sodo-calcique de 4 mm recouvert d'une couche électroconductrice, éventuellement d'une couche à propriétés électrochromes et/ou d'une couche faisant partie également de l'électrolyte, la couche sur laquelle on dépose la couche selon l'invention étant déterminée par la configuration du système électrochrome envisagé.

Toutes les couches selon l'invention des exemples 1 à 3 suivants sont à base d'oxyde(s) métallique(s) et déposées par pulvérisation cathodique réactive, à partir d'une cible métallique en présence d'oxygène.

### EXEMPLE 1

Un premier type de couche est une couche d'oxyde de tantale hydraté, notée par commodité Ta₂O₅.nH₂O. (Dans le cadre de cette demande, l'incorporation d'eau dans un oxyde sera notée nH₂O, qu'elle reflète ou non la réalité, puisque l'on ne distingue pas dans cette notation s'il s'agit d'eau d'adsorption, de cristallisation et/ou s'il s'agit en fait d'un hydroxyde avec fonctions hydroxyle).

Cette couche est déposée par pulvérisation cathodique assistée par champ magnétique, pulvérisation réactive utilisant une cible de tantale métallique.

*Exemple 1a :* le dépôt a été effectué une première fois, à titre de comparaison, dans une atmosphère réactive exclusivement composée d'un mélange Ar/O₂ en vue d'obtenir un oxyde non hydraté.

*Exemple 1b* : Ce dépôt a été effectué dans une atmosphère Ar/O₂/H₂.

*Exemple 1c :* Le dépôt a été effectué dans une atmosphère Aᵣ/O₂/H₂O.

### EXEMPLE 2

Le deuxième type de couche est une couche à base d'oxyde d'antimoine hydraté. Sb₂O₅.nH₂O. Elle est déposée par la même technique que pour l'exemple 1, à partir d'une cible de Sb métallique.

*Exemple 2a :* le dépôt a été effectué une première fois, à titre de comparaison, dans une atmosphère réactive exclusivement composée d'un mélange Ar/O₂,

*Exemple 2b :* Ce dépôt a été effectué dans une atmosphère Ar/O₂/H₂.

*Exemple 2c :* Le dépôt a été effectué dans une atmosphère Ar/O₂/H₂O.

### EXEMPLE 3

Le troisième type de couche est une couche à base d'oxyde de tantale auquel on incorpore du tungstène et qui est hydraté, couche notée par convention TaWOₓ.nH₂O. elle est déposée par la même technique de dépôt que pour les deux exemples précédentes, à partir d'une cible en alliage Ta-W dans une proportion massique relative de 5% de tungstène.

*Exemple 3a :* le dépôt a été effectué une première fois, à titre de comparaison, dans une atmosphère réactive exclusivement composée d'un mélange Ar/O₂,

*Exemple 3b :* Ce dépôt a été effectué dans une atmosphère Ar/O₂/H₂.

*Exemple 3c :* Le dépôt a été effectué dans une atmosphère Ar/O₂/H₂O.

Les conditions de dépôt pour ces 6 couches sont résumées dans le tableau 1 ci-dessous, qui, pour chacune d'entre elles, indique la nature du matériau déposé, le débit des gaz introduits dans la chambre de pulvérisation en cm³/minute dans les conditions standard, la pression totale régnant dans la chambre de pulvérisation exprimée en Pascal, et la puissance utilisée en watts. Les couches sont déposées dans des épaisseurs de préférence comprises entre 20 et 300 nm, elles sont ajustées pour autoriser une mesure correcte par FTIR et impédancemétrie. (Incorporées dans un vitrage électrochrome, leurs épaisseurs seront précisées à l'aide des exemples A et B suivants).

**TABLEAU 1**

| | **Nature de la couche** | **Débit de gaz** | **Pression** | **Puissance** |
|---|---|---|---|---|
| Exemple 1a | Ta₂O₅ | Aᵣ : 10 | 4.10⁻¹ | 260 |
| | | O₂ : 7,7 | | |
| Exemple 1b | Ta₂O₅.nH₂O | Aᵣ : 20 | 1 | 186 |
| | | O₂ : 2 | | |
| | | H₂ : 10 | | |
| Exemple 1c | Ta₂O₅.nH₂O | Aᵣ : 20 | 2 | 156 |
| | | O₂ : 2 | | |
| | | H₂O : 2,2 | | |
| Exemple 2a | Sb₂O₅ | Aᵣ : 20 | 2 | 90 |
| | | O₂ : 7 | | |
| Exemple 2b | Sb₂O₅.nH₂O | Aᵣ : 20 | 2 | 87 |
| | | O₂ : 8 | | |
| | | H₂ : 10 | | |
| Exemple 2c | Sb₂O₅.nH₂O | Aᵣ : 20 | 2 | 89 |
| | | O₂ : 6 | | |
| | | H₂O : 2,2 | | |
| Exemple 3a | TaWOₓ | Aᵣ : 20 | 1 | 157 |
| | | O₂ : 4 | | |
| Exemple 3b | TaWO_{x.}nH₂O | Aᵣ : 20 | 1 | 130 |
| | | O₂ : 10 | | |
| | | H₂ : 10 | | |
| Exemple 3c | TaWOₓ.nH₂O | Aᵣ : 20 | 1 | 140 |
| | | O₂ : 10 | | |
| | | H₂O : 2,2 | | |

Le tableau 2 ci-dessous récapitule, pour chacune de ces six couches :
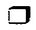 leur teneur en eau, mesurée par analyse FTIR par l'aire des pics correspondant aux absorptions dues à la vibration symétrique des liaisons OH, teneur exprimée sans unité. Cette teneur n'est qu'une évaluation, mais qui permet de faire des comparaisons d'une couche à l'autre,
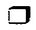 leur conductivité protonique mesurée par impédancemétrie complexe, exprimée en unité ohm⁻¹.cm⁻¹.

**TABLEAU 2**

| | **Nature de la couche** | **Teneur en eau** | **Conductivité protonique** |
|---|---|---|---|
| Exemple 1a | Ta₂O₅ (Ar/O₂) | 0 | 9.10⁻⁹ |
| Exemple 1b | Ta₂O₅ hydraté (Ar/O₂/H₂) | 2,79 | 3,4.10⁻⁵ |
| Exemple 1c | Ta₂O₅ hydraté (Ar/O₂/H₂O) | 2,24 | 2,5.10⁻⁵ |
| Exemple 2a | Sb₂O₅ (Ar/O₂) | 1,98 | 1,2.10⁻⁵ |
| Exemple 2b | Sb₂O₅ hydraté (Ar/O₂/H₂) | 8,14 | 7,3.10⁻⁵ |
| Exemple 2c | Sb₂O₅ hydraté (Ar/O₂/H₂O) | 7,14 | 2,0.10⁻⁵ |
| Exemple 3a | TaWOₓ (Ar/O₂) | 1,62 | 1,8.10⁻⁵ |
| Exemple 3b | TaWOₓ hydraté (Ar/O₂/H₂) | 3,47 | 5,9.10⁻⁵ |
| Exemple 3c | TaWOₓ hydraté (Ar/O₂/H₂O) | 3,03 | 3.10⁻⁵ |

De ce tableau 2 et plus particulièrement des résultats de l'exemple 1, on peut voir qu'en l'absence d'hydratation, une couche de type oxyde de tantale est en fait extrêmement isolante ioniquement : sans l'hydratation contrôlée, cette couche est a priori inutilisable en tant qu'électrolyte, à moins de la modifier structurellement, par exemple en favorisant une croissance cristalline colonnaire, créant une porosité suffisante pour que la couche soit perméable aux ions. Mais cela est très difficile à maîtriser, et encore plus à optimiser.

Les exemples 2 et 3 illustrent le cas où l'hydratation permet d'améliorer une conductivité protonique déjà existante, mais insuffisante. Dans les deux cas, c'est avec une atmosphère réactive utilisant un mélange O₂/H₂ pour générer l'eau in situ que l'on obtient les conductivités protoniques les plus élevées.

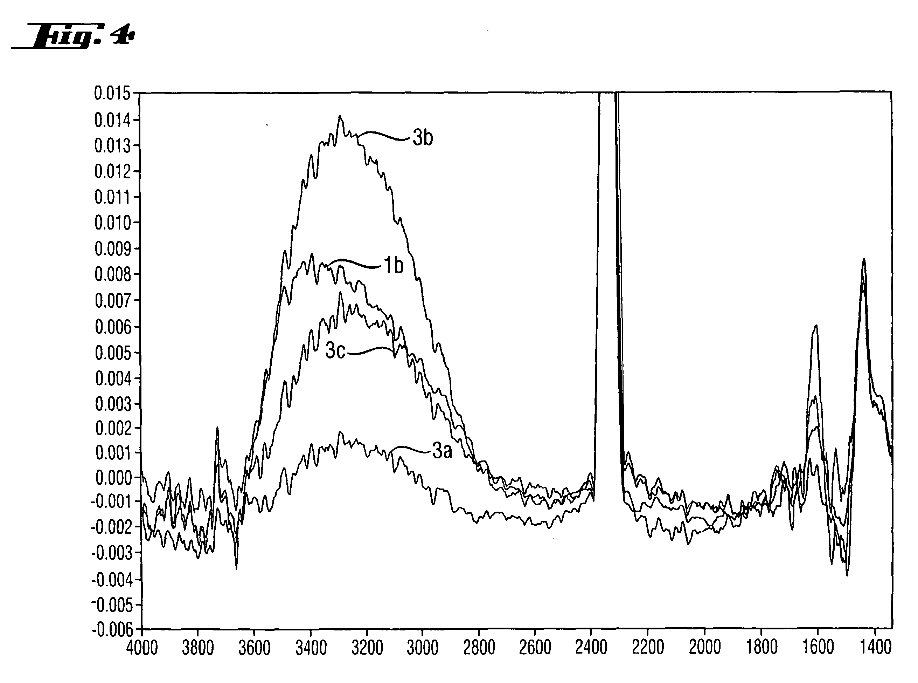

La figure 4 montre les courbes d'analyse FTIR des couches selon les exemples 3a, 3b, 3c et 1b. En abscisse, sont indiqués les nombres d'onde en cm⁻¹ et en ordonnées les absorbances. Le taux d'hydratation se remarque par l'importance des pics qui se situent environ entre 3650 et 2800 cm⁻¹, pics correspondant aux vibrations des liaisons O-H. On vérifie qu'une conductivité protonique élevée est corrélée à une teneur en eau significative.

Ces trois types de couches peuvent donc avantageusement être incorporés dans des électrolytes mono-ou multicouches de vitrages électrochromes tels que ceux représentés en figures 1 et 2.

La figure 1 correspond à un vitrage électrochrome dont l'électrolyte contient un polymère (exemple A). La figure 2 correspond à un vitrage électrochrome « tout solide » (exemple B).

### Exemple A

L'exemple A correspond au vitrage représenté à la figure 1 qui est un vitrage fonctionnant par transfert protonique. Il est constitué d'un premier substrat en verre 1, de verre silico-sodo-calcique de 4 mm, puis successivement :
- une première couche électroconductrice 2 en SnO₂:F de 300 nm,
- une première couche de matériau électrochrome anodique 3 en oxyde de nickel hydraté NiOₓH_{y} de 185 nm, (elle pourrait être remplacée par une couche en oxyde d'iridium hydraté de 55 nm),
- un électrolyte 4 se décomposant en une première couche 4a en oxyde de tantale hydraté selon l'exemple 1b de 70 nm, une seconde couche 4b en solution solide de polyoxyéthylène avec de l'acide phosphorique POE-H₃PO₄ de 100 micromètres, ou alternativement une solution solide de polyéthylène imine avec de l'acide phosphorique PEI-H₃PO₄,
- une seconde couche 5 de matériau électrochrome cathodique à base d'oxyde de tungstène de 350 nm,
- une seconde couche 6 de SnO₂:F de 300 nm puis un second substrat en verre 7 identique au premier.

Sont également représentées les amenées de courant 11, 12 sous forme de bandes placées aux extrémités opposées des deux couches électroconductrices 2, 6 et reliées électriquement à un générateur de tension 10.

On a donc, dans cet exemple, un électrolyte bi-couche à base de polymère habituellement utilisé dans ce type de vitrage, qui est « doublé » d'une couche d'oxyde de tantale hydraté suffisamment conductrice pour ne pas pénaliser le transfert de protons via le polymère et qui protège la contre-électrode en matériau électrochrome anodique du contact direct avec ce dernier, dont l'acidité intrinsèque lui serait préjudiciable.

A la place de la couche en Ta₂O₅ hydraté peut être utilisée la couche de type Sb₂O₅ ou TaWOₓ hydraté des exemples 2 et 3.

On peut aussi prévoir un électrolyte tri-couche, avec deux couches d'oxyde hydraté, soit de part et d'autre de la couche de polymère, soit superposées l'une à l'autre du côté de la contre-électrode.

### Exemple B

Cet exemple correspond au vitrage représenté en figure 2. Il est constitué d'un substrat en verre 1, sur lequel sont déposées l'une après l'autre les couches suivantes :
- une couche électroconductrice 2 en ITO ou en SnO₂:F de 300 nm,
- une couche 3 en matériau électrochrome cathodique en oxyde de tungstène WO₃, d'épaisseur 350 nm,
- un électrolyte 4 bi-couche composé d'une couche 4a d'oxyde de tantale hydraté et d'une couche 4b d'oxyde d'antimoine hydraté d'épaisseur 100 nm chacune,
- une couche 5 en matériau électrochrome anodique en oxyde de nickel NiOₓ d'épaisseur d'environ 200 nm ou en oxyde d'iridium IrOₓ d'épaisseur environ 50 nm, ces oxydes étant éventuellement hydratés,
- une couche 6 électroconductrice en argent de 10 nm,
- un ensemble de couches 8 visant à protéger la couche sous-jacente d'argent, notamment vis-à-vis de l'oxydation. Il s'agit de préférence d'une mince couche de NiCr de 1 à 3 nm d'épaisseur surmontée d'une couche de matériau par exemple diélectrique, notamment à base d'oxyde tel que l'oxyde d'étain, d'une épaisseur comprise entre 20 et 50 nm. (La couche de NiCr permet de protéger de l'oxydation la couche d'argent lors du dépôt de la couche en SnO₂ par pulvérisation cathodique en présence d'oxygène. Elle est donc, dans le vitrage final, partiellement ou totalement oxydée). Une seconde couche de NiCr peut aussi être éventuellement intercalée entre la couche d'argent 6 et la couche électrochimiquement active 5. (Si l'on augmente suffisamment l'épaisseur de la couche d'argent, par exemple jusqu'à 30 à 50 nm, on peut alors obtenir un vitrage électrochrome qui ne fonctionne plus en transmission, mais en réflexion, ou alors en miroir : l'observateur regarde ici le vitrage à travers le substrat 1 et sa modification de couleur, puisque la première couche électroconductrice 2 est transparente, l'effet réfléchissant miroir étant obtenu par la seconde couche électroconductrice 6 métallique).

On a dans cet exemple un électrolyte bi-couche « tout solide » performant. Il est tout à fait possible de n'utiliser qu'une seule couche d'oxyde hydraté au lieu de deux. Cependant, un tel électrolyte « bi-couche » peut offrir certains avantages. Ainsi, on peut optimiser au mieux la nature de chacun des oxydes pour qu'ils offrent une compatibilité maximale avec chacune des couches se trouvant de part et d'autre de l'électrolyte. En outre, on peut jouer sur la façon dont chacune des deux couches de l'électrolyte va se former, la seconde pouvant se nucléer de manière appropriée sur la première pour offrir la structure la plus appropriée pour augmenter la perméabilité aux ions de l'électrolyte dans son ensemble.

En outre, dans le cas d'un électrolyte « tout solide », il est préférable que ce dernier soit isolant électroniquement : dans une structure multicouches, il peut suffire qu'une seule des couches du multicouches réponde à ce critère.

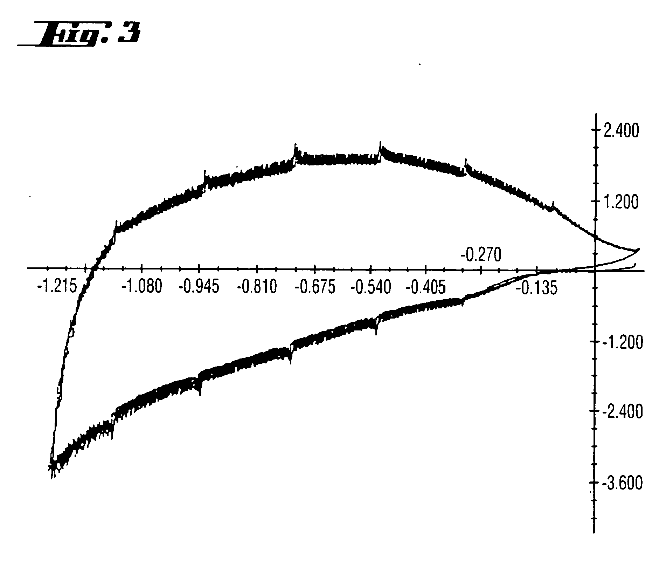

Le voltamogramme de la figure 3 permet de « visualiser » le courant échangé en fonction du potentiel appliqué au vitrage selon l'exemple A (avec du PEI-H₃PO₄ dans l'électrolyte). Il montre une fonctionnalité correcte du système. (en abscisse, est représenté le potentiel en volt et en ordonnées le courant en mA). La quantité de charges échangées par cycle est de 10 mC/cm² pour une surface de 28 cm². A noter que le vitrage selon l'exemple A, correspondant au voltamogramme, présente, avant montage possible en double-vitrage, une valeur de transmission lumineuse de T_{L} de 73% à l'état décoloré et de 8% à l'état coloré, des valeurs de coloration en transmission selon le système de colorimétrie (L, a*, b*) telles que :
a* = -5,5 et b* = 6,1 à l'état décoloré
a* = -5 et b* = -6,1 à l'état coloré.
(Les mesures s'effectuent selon l'Illuminant D₆₅).

### Exemple C

Cet exemple C a une configuration similaire à l'exemple B, avec un électrolyte bi-couche, et montée en vitrage feuilleté : on a un substrat de verre de 1 mm d'épaisseur, muni successivement :
- d'une couche en ITO de 300 nm,
- d'une couche à matériau électrochrome à coloration anodique IrOx d'environ 40 nm,
- d'un électrolyte bi-couche dont une couche de WO3 de 200 nm et d'une couche d'oxyde de tantale hydraté de 150 nm,
- d'une couche à matériau électrochrome à coloration cathodique à base de WO3 d'environ 350 nm déposée par pulvérisation cathodique dans un plasma H2/O2 pour opérer in-situ sa pré-insertion en protons, il se trouve ainsi directement sous forme réduite, ce que l'on peut contrôler par une mesure de densité de courant d'environ 20 mC/cm²,
- d'une dernière couche électroconductrice d'lTO de 300 nm (résistance carré, comme la précédente, d'environ 15 ohms par carré).

Le substrat ainsi revêtu est ensuite feuilleté à un second verre de 1 mm d'épaisseur par une feuille d'intercalaire à base d'EVA de 1 mm d'épaisseur.

Alimenté par un générateur de tension de manière connue sous une tension de -1,6V, à l'état coloré, la transmission lumineuse TL du vitrage est de 6%, avec des valeurs a* et b* en réflexion du système colorimétrique (L, a*, b*) de respectivement -0,6 et -25,6. A l'état décoloré (+ 1,0V), la TL est de 76,5% et les valeurs de a* et b* en réflexion de respectivement -2,3 et + 8,7.

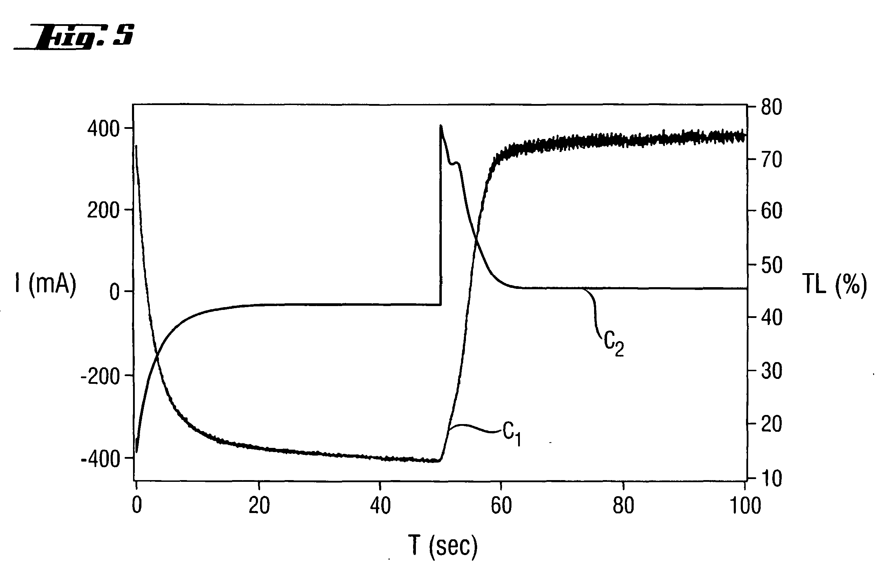

La figure 5 représente un cycle de fonctionnement du vitrage : en abcisse, est représenté le temps en seconde, en ordonnées à gauche l'intensité mesurée en mA et en ordonnées à droite la valeur de TL. La courbe C1 mesurée en mA et en ordonnées à droite la valeur de TL. La courbe C1 représente les variations de TL et la courbe C2 les variations d'intensité. Le cycle se décompose en une première phase de coloration puis une seconde de décoloration.

Avec un tel vitrage électrochrome, on obtient donc un contraste très élevé : si l'on définit le contraste par le rapport de la TL à l'état décoloré sur la TL à l'état coloré, il est de plus de 10, plus exactement de 12,75, ce qui est un résultat excellent, la durabilité, notamment thermique, du système est en outre garantie par le feuilletage avec la feuille d'EVA.

Beaucoup d'autres dispositifs électrochromes peuvent utiliser des électrolytes à couche(s). Sans être bien sûr exhaustif, on peut par exemple citer des vitrages électrochromes de configuration type :
↪ a : substrat type verre
b : couche électroconductrice
c : matériau à coloration cathodique type WO₃
d : électrolyte multicouches :
   d₁ : Ta₂O₅.nH₂O ou Sb₂O₅.nH₂O,
   d₂ : matériau à coloration cathodique type WO₃ éventuellement hydraté mais maintenu à degré d'oxydation constant par la présence de d₁ venant s'intercaler entre c et d₂
e : matériau à coloration anodique type NiOₓ, IrOₓ
f : couche électroconductrice
g : éventuellement second substrat
Symétriquement, on peut avoir une configuration type :
↪ a : substrat type verre
b : couche électroconductrice
c : matériau à coloration cathodique type WO₃
d : électrolyte multicouches :
   d₁ : matériau à coloration anodique type NiOₓH_{y} mais maintenu à degré d'oxydation constant par la présence de d₂
   d₂ : couche type Ta₂O₅.nH₂O
e : matériau à coloration anodique type NiOₓH_{y}
f : couche électroconductrice
g : éventuellement second substrat
↪ On peut également avoir une configuration telle que l'on substitue au matériau à coloration anodique e et à la couche électroconductrice f une unique couche (e, f) en métal, plus particulièrement à base d'or Au.

## Revendications

1. Dispositif électrochimique comportant au moins un substrat (1, 7), au moins une couche électroconductrice (2, 6), au moins une couche électrochimiquement active susceptible d'insérer de manière réversible des ions, notamment des cations du type H⁺, Li⁺, Na⁺, Ag⁺ et un électrolyte, l'électrolyte (4) comprenant au moins une première couche mince en matériau essentiellement minéral, du type oxyde, **caractérisé en ce que** la conduction, ionique de l'électrolyte est générée ou amplifiée par incorporation d'au moins un composé choisi parmi, un acide de Brönsted, une base de Brönsted, un aminé, une imine, l'hydrazine N₂O, l'ammoniac NH₃, un composé à base d'aluminosilicates du type mica ou feldspath ou un composé à base d'hétéropolyacide, du type phosphate acide, notamment du type ZnO (H₃PO₄)₂.nH₂O.

2. Dispositif selon la revendication précédente, ***caractérisé en ce que*** la première couche est isolante électroniquement.

3. Dispositif selon la revendication 1, ***caractérisé en ce que*** l'électrolyte (4) est un empilement multicouches (4a, 4b), comportant, outre la première couche au moins une autre couche en matériau essentiellement minéral.

4. Dispositif selon l'une des revendications précédentes, ***caractérisé en ce que*** l'électrolyte est un empilement multicouches comportant également une couche en un matériau conducteur ionique choisi sous la forme d'un liquide anhydre ou aqueux ou à base de gel(s), ou de polymère(s), notamment un électrolyte du type (première couche /POE:H₃PO₄).

5. Dispositif selon l'une des revendications précédentes, ***caractérisé en ce que*** au moins une des couches électrochimiquement active, notamment celle à propriétés électrochromes à coloration cathodique du type W0₃ est pré-insérée en cations, notamment en protons, pendant sa formation.

6. Dispositif électrochimique selon l'une des revendications précédentes, ***caractérisé en ce qu'il*** est muni de joint(s) du type époxy.

7. Vitrage électrochrome, ***caractérisé en* ce *qu'****il* comporte le dispositif électrochimique selon l'une des revendications précédentes, présentant notamment une transmission lumineuse et/ou énergétique variable, avec le substrat ou l'ensemble des substrats transparent(s), en verre ou en matériau plastique, de préférence monté en vitrage multiple et/ou feuilleté.

8. Vitrage électrochrome selon la revendication 7, ***caractérisé en ce qu'il*** présente une structure feuilletée du type substrat rigide/empilement fonctionnel/intercalaire polymère/substrat rigide ou du type PET.

9. Vitrage électrochrome selon la revendication 8, **caractérisé en ce que** le substrat rigide est en verre ou polycarbonate, et l'intercalaire en PU, PVB ou EVA, avec notamment une structure feuilletée de type : verre/empilement fonctionnel/EVA ou PU/verre

10. Eléments de stockage d'énergie, notamment batterie, ***caractérisé en ce qu'**il* comporte le dispositif électrochimique selon l'une des revendications 1 à 6.

11. Capteur de gaz, ***caractérisé en ce qu'**il* comporte le dispositif électrochimique selon l'une des revendications 1 à 6.

12. Procédé de fabrication du dispositif électrochimique selon l'une des revendications 1 à 6, ***caractérisé en ce qu'on*** dépose la première couche, de l'électrolyte par une technique utilisant le vide du type pulvérisation cathodique, évaporation, CVD plasma, ou par une synthèse par voie sol-gel, notamment du type trempé, spray-coating, enduction laminaire ou encore par pyrolyse en phase liquide ou pulvérulente ou gazeuse.

13. Procédé selon la revendication 12, ***caractérisé en* ce *qu'******on*** dépose la première couche par pulvérisation réactive dans une atmosphère contenant les composés, ou les « précurseurs » desdits composés, notamment, dans le cas d'un électrolyte sous forme d'un oxyde nitruré dans une atmosphère contenant NH₃.

14. Procédé selon la revendication 12, ***caractérisé en ce qu'**on* dépose la première couche par évaporation thermique éventuellement assistée par un faisceau d'électrons, les composés ou leurs « précurseurs » étant introduits dans la couche sous forme gazeuse et/ou étant contenus dans le matériau destiné à être évaporé.

15. Procédé selon la revendication 12, ***caractérisé en* ce qu'**on dépose la première couche par une synthèse par voie sol-gel, en contrôlant la teneur en composé(s) de la couche par le choix de la composition de la solution, l'atmosphère lors du dépôt et/ou la température de dépôt/de durcissement de la couche.

16. Procédé selon l'une des revendications 12 à 15, ***caractérisé en ce qu'on*** dépose au moins une des couches électrochimiquement active par une technique utilisant le vide, notamment par pulvérisation réactive dans des conditions autorisant sa pré-insertion lors de son dépôt en cations.

17. Utilisation du vitrage électrochrome selon l'une des revendications 7 à 9 en tant que vitrage pour le bâtiment, vitrage pour l'automobile, vitrage de véhicules industriels ou de transport collectif, vitrage ferroviaire, vitrage d'avion, rétroviseurs, miroirs, en tant qu'éléments d'optique tels que les objectifs d'appareils photographiques, en tant que face avant ou élément à disposer sur la face avant d'écrans de visualisation, d'appareils tels que les ordinateurs ou les télévisions.

18. Utilisation de l'élément de stockage d'énergie selon la revendication 17 dans des appareils faisant intervenir des moyens électroniques et/ou informatiques et dans les appareils nécessitant un dispositif de stockage d'énergie qui leur soit propre, autonome ou non, notamment des ordinateurs, télévisions ou téléphones.

## Claims

1. Electrochemical device which includes at least one substrate (1, 7), at least one electronically conductive layer (2, 6), at least one electrochemically active layer capable of inserting ions reversibly, in particular cations of the H⁺, Li⁺, Na⁺ and Ag⁺ type, and an electrolyte, the electrolyte (4) comprising at least a first thin layer of essentially inorganic material, of the oxide type, ***characterized in that*** the ionic conduction of the electrolyte is generated or increased by incorporating at least one compound chosen from a Brønsted acid, a Brønsted base, an amine, an imine, hydrazine, N₂O, ammonia NH₃, an aluminosilicate-based compound of the mica or feldspar type or a heteropolyacid-based compound of the acid phosphate type, especially of the ZnO (H₃PO4)₂·nH₂O type.

2. Device according to the preceding claim, ***characterized in that*** the first layer is electronically insulating.

3. Device according to Claim 1, ***characterized in that*** the electrolyte (4) is a multilayer stack (4a, 4b) which includes, in addition to the first layer, at least one other layer of an essentially inorganic material.

4. Device according any one of the preceding claims, ***characterized in that*** the electrolyte is a multilayer stack which also includes a layer of an ionically conductive material chosen in the form of an anhydrous or aqueous liquid or a liquid based on a gel or gels, or on a polymer or polymers, especially an electrolyte of the (first layer/POE:H₃PO₄) type.

5. Device according to one of the preceding claims, ***characterized in that*** at least one of the electrochemically active layers, especially that exhibiting cathodic colouring electrochromic properties, of the WO₃ type, is pre-inserted with cations, especially with protons, while it is being formed.

6. Electrochemical device according to one of the preceding claims, ***characterized in that*** it is provided with one or more epoxy-type seals.

7. Electrochromic window, ***characterized in that*** it includes the electrochemical device according to one of the preceding claims, having in particular a variable light and/or energy transmission, with the transparent substrate or all the transparent substrates made of glass or plastic, preferably fitted into multiple glazing and/or laminated glass.

8. Electrochromic window according to Claim 7, ***characterized in that*** it has a laminated structure of the rigid substrate/functional stack/polymer interlayer/rigid substrate type or PET type.

9. Electrochromic window according to Claim 8, ***characterized* in that** the rigid substrate is made of glass or polycarbonate and the interlayer is made of PU, PVB or EVA, especially with a laminated structure of the glass/functional stack/EVA or PVB/glass type.

10. Energy storage element, in particular a battery, ***characterized in that*** it includes the electrochemical device according to one of Claims 1 to 6.

11. Gas sensor, ***characterized in that*** it includes the electrochemical device according to one of Claims 1 to 6.

12. Process for manufacturing an electrochemical device according to one of Claims 1 to 6, ***characterized in that*** the first layer of the electrolyte is deposited using a vacuum technique of the sputtering, evaporation or plasma CVD type or using sol-gel synthesis, especially of the dipping, spray-coating or roll- coating type, or else liquid-phase or pulverulent-phase or gas-phase pyrolysis.

13. Process according to Claim 12, ***characterized in that*** the first layer is deposited using reactive sputtering in an atmosphere containing the compounds, or the "precursors" of said compounds, especially in the case of an electrolyte in the form of a nitride-containing oxide, in an atmosphere containing NH₃.

14. Process according to Claim 12, ***characterized in that*** the first layer is deposited using thermal evaporation, optionally assisted by an electron beam, the compounds or their "precursors" being introduced into the layer in gaseous form and/or being contained in the material intended to be evaporated.

15. Process according to Claim 12, ***characterized in that*** the first layer is deposited by sol-gel synthesis, by controlling the content of the compound(s) of the layer by the choice of the composition of the solution, the atmosphere during deposition and/or the temperature of deposition/temperature of curing of the layer.

16. Process according to one of Claims 12 to 15, ***characterized in that*** at least one of the electrochemically active layers is deposited using a vacuum technique, especially using reactive sputtering under conditions allowing its pre-insertion, during its deposition, with cations.

17. Use of the electrochromic window according to one of Claims 7 to 9 as a window for a building, a window for a motor vehicle, a window for industrial or public-transport vehicles, a railway window, an aircraft window, rear-view mirrors and other mirrors, as optical components such as camera lenses, as the front face or element to be arranged on the front face of display screens of appliances such as computers or televisions.

18. Use of the energy storage element according to Claim 17 in appliances involving electronic and/or computing means and in appliances requiring an energy storage device which is specific to them, autonomous or not, especially computers, televisions or telephones.

## Patentansprüche

1. Elektrochemische Vorrichtung, die mindestens ein Substrat (1, 7), mindestens eine elektrisch leitfähige Schicht (2, 6), mindestens eine elektrochemisch aktive Schicht, die in der Lage ist, Ionen, insbesondere Kationen vom Typ H⁺, Li⁺, Na⁺ und Ag⁺, reversibel einzulagern, und einen Elektrolyten, den Elektrolyten (4), umfasst, der mindestens eine erste dünne Schicht aus einem im Wesentlichen anorganischen Material vom Typ Oxid umfasst, **dadurch gekennzeichnet, dass** die Ionenleitung durch den Einbau mindestens einer Verbindung erzeugt oder verstärkt wird, die aus einer Brønstedsäure, einer Bronstedbase, H, einem Amin, einem Imin, Hydrazin, N₂O, Ammoniak, NH₃, einer Verbindung auf der Basis von Aluminosilicat vom Typ Glimmer oder Feldspat oder einer Verbindung auf der Basis einer Heteropolysäure vom Typ Phosphatsäure, insbesondere vom Typ ZnO (H₃PO₄)₂·nH₂O, ausgewählt wird.

2. Vorrichtung nach dem vorhergehenden Anspruch, **dadurch gekennzeichnet, dass** die erste Schicht elektronenisolierend ist.

3. Vorrichtung nach Anspruch 1, **dadurch gekennzeichnet, dass** der Elektrolyt (4) ein mehrschichtiger Aufbau (4a, 4b) ist, der außer der ersten Schicht mindestens eine weitere Schicht aus einem im Wesentlichen anorganischen Material umfasst.

4. Vorrichtung nach einem der vorhergehenden Ansprüche, **dadurch gekennzeichnet, dass** der Elektrolyt ein mehrschichtiger Aufbau ist, der auch eine Schicht aus einem ionenleitfähigen Material umfasst, das in Form einer wasserfreien oder wässrigen Flüssigkeit oder auf der Basis von (einem) Gel(en) bzw. (einem) Polymer(en), insbesondere einem Elektrolyten vom Typ (erste Schicht/POE:H₃PO₄), ausgewählt ist.

5. Vorrichtung nach einem der vorhergehenden Ansprüche, **dadurch gekennzeichnet, dass** mindestens eine der elektrochemisch aktiven Schichten, insbesondere diejenige mit elektrochromen Eigenschaften mit kathodischer Verfärbung vom Typ WO₃, während ihrer Bildung mit Kationen, speziell Protonen, voreingelagert wird.

6. Elektrochemische Vorrichtung nach einem der vorhergehenden Ansprüche, **dadurch gekennzeichnet, dass** sie mit (einer) Dichtung(en) vom Typ Epoxid versehen ist.

7. Elektrochromes Glas, **dadurch gekennzeichnet, dass** es die elektrochemische Vorrichtung nach einem der vorhergehenden Ansprüche umfasst und insbesondere einen veränderbaren Licht- und/oder Strahlungstransmissionsgrad aufweist, wobei das transparente Substrat oder die Einheit aus transparenten Substraten aus Glas oder Kunststoff vorzugsweise zu einem Mehrscheibenglas und/oder Verbundglas zusammengebaut ist.

8. Elektrochromes Glas nach Anspruch 7, **dadurch gekennzeichnet, dass** es eine Verbundstruktur vom Typ starres Substrat/Funktionsaufbau/polymere Zwischenschicht/starres Substrat oder vom Typ PET aufweist.

9. Elektrochromes Glas nach Anspruch 8, **dadurch gekennzeichnet, dass** das starre Substrat aus einem Glas oder Polycarbonat und die Zwischenschicht aus PU, PVB oder EVA besteht, mit insbesondere einer Verbundstruktur vom Typ Glas/Funktionsaufbau/EVA oder PU/Glas.

10. Energiespeicherelement, insbesondere Batterie, **dadurch gekennzeichnet, dass** es die elektrochemische Vorrichtung nach einem der Ansprüche 1 bis 6 umfasst.

11. Gassensor, **dadurch gekennzeichnet, dass** er die elektrochemische Vorrichtung nach einem der Ansprüche 1 bis 6 umfasst.

12. Verfahren zur Herstellung der elektrochemischen Vorrichtung nach einem der Ansprüche 1 bis 6, **dadurch gekennzeichnet, dass** die erste Schicht des Elektrolyten durch ein Vakuumverfahren vom Typ Kathodenzerstäubung, Aufdampfen und Plasma-CVD oder Sol-Gel-Synthese, insbesondere vom Typ Tauchen, Sprühbeschichten, Walzauftrag oder Pyrolyse aus der flüssigen bzw. pulverförmigen Phase oder durch Gasphasenabscheidung aufgebracht wird.

13. Verfahren nach Anspruch 12, **dadurch gekennzeichnet, dass** die erste Schicht durch reaktive Zerstäubung in einer Atmosphäre, welche die Verbindungen oder die "Vorläufer" dieser Verbindungen enthält, insbesondere im Fall eines Elektrolyten in Form eines in einer NH₃ enthaltenden Atmosphäre nitridierten Oxids, aufgebracht wird.

14. Verfahren nach Anspruch 12, **dadurch gekennzeichnet, dass** die erste Schicht durch thermisches Aufdampfen, gegebenenfalls durch ein Elektronenstrahlbündel unterstützt, aufgebracht wird, wobei die Verbindungen oder ihre "Vorläufer" in die Schicht in gasförmiger Form eingebracht werden und/oder in dem zum Verdampfen bestimmte Materialien enthalten sind.

15. Verfahren nach Anspruch 12, **dadurch gekennzeichnet, dass** die erste Schicht durch eine Sol-Gel-Synthese aufgebracht wird, wobei der Gehalt an Verbindung(en) der Schicht durch die Auswahl der Zusammensetzung der Lösung, der Atmosphäre während der Abscheidung und/oder der Temperatur der Abscheidung/Aushärtung der Schicht kontrolliert wird.

16. Verfahren nach einem der Ansprüche 12 bis 15, **dadurch gekennzeichnet, dass** mindestens eine der elektrochemisch aktiven Schichten durch ein Vakuumverfahren, insbesondere reaktive Zerstäubung, unter Bedingungen, welche während ihrer Abscheidung die Voreinlagerung von Kationen ermöglichen, aufgebracht wird.

17. Verwendung des elektrochromen Glases nach einem der Ansprüche 7 bis 9 als Verglasung für Gebäude, für Kraftfahrzeuge, von Nutzfahrzeugen oder öffentlichen Verkehrsmitteln, Flugzeugverglasungen, Verglasungen von Eisenbahnzügen, Rückspiegel, Spiegel oder als optische Elemente wie Objektive für Fotoapparate, als Vorderseite oder Element, das auf der Vorderseite von Bildschirmen von Geräten wie Computern oder Fernsehern angeordnet ist.

18. Verwendung des Energiespeicherelements nach Anspruch 17 in Geräten, an welchen elektronische und/oder Informatikmittel beteiligt sind, und in Geräten, die eine gegebenenfalls autonome ihnen eigene Energiespeichervorrichtung brauchen, insbesondere in Computern, Fernsehern oder Telefonen.
